# EUROPEAN PATENT SPECIFICATION

(11) **EP 3 819 526 B1**
(45) Date of publication and mention of the grant of the patent: **24.04.2024**
(21) Application number: 19830749.8
(22) Date of filing: 27.06.2019
(51) Int. Cl.: F16J 15/3232, F16C 33/78, F16C 19/18

(54) **SEALING DEVICE**
DICHTUNGSVORRICHTUNG
DISPOSITIF D'ÉTANCHÉITÉ

(30) Priority: 03.07.2018 JP 2018126855
(43) Date of publication of application: 12.05.2021
(73) Proprietor: NOK Corporation, Minato-ku, Tokyo 105-8585 (JP)
(72) Inventor: TARUKAWA, Yuichi, Fukushima-shi, Fukushima 960-1193 (JP)
(74) Representative: TBK
(86) International application number: PCT/JP2019/025714
(87) International publication number: WO 2020/009005

(56) References cited:
- WO-A1-2018/097233
- JP-A- 2004 263 738
- JP-A- 2011 080 570
- JP-A- 2012 021 616
- JP-A- 2017 087 629
- JP-A- 2018 084 318

## Description

### [Technical Field]

The present disclosure relates to a sealing device provided to a hub bearing and the like.

### [Background Art]

Car hub bearings are provided with sealing devices on both vehicle-body side and tire side. These sealing devices have a function of sealing annular gaps between inner rings and outer rings of the hub bearings. These sealing devices include a foreign matter lip for inhibiting ingress of foreign matter from outside, a grease lip for inhibiting leakage of grease, and a mid lip between these two lips. These lips are provided so as to be slidable relative to the inner ring or a slinger fixed to the inner ring.

It has been awaited to reduce torque due to sliding movements of the sealing devices configured as described above. Measures to reduce torque by forming mat-surface roughness on sliding surfaces of each lip have been considered. However, increase in surface roughness due to formation of the mat-surface roughness leads to deterioration in sealing performance. As torque reduction and sealing performance improvement do not go together, it was difficult to satisfy both of these.
JP 2018 084318 A discloses a sealing device having the features of the preambles of claims 1 and 4. JP 2010 185491 A and JP 2017 087629 A disclose further related prior art.

### [Summary of Invention]

### [Technical Problem]

An object of the present disclosure is to provide a sealing device that can achieve both of torque reduction and sealing performance improvement.

### [Solution to Problem]

The present disclosure adopts the following means to achieve the object noted above.

Namely, one aspect of the present disclosure is a sealing device set forth in claim 1. Advantageous further developments thereof are set out in the dependent claims.

According to the present disclosure, when at least one of the sliding surface of the foreign matter lip and the sliding surface of the lubricant lip is not provided with mat-surface roughness, the lip that is not formed with mat-surface roughness has higher sealing performance. Meanwhile, as the sliding surface of the mid lip is provided with mat-surface roughness, torque due to sliding movements can be reduced. The "mat-surface roughness" refers to roughness that is actively formed on the sliding surface of the lip and do not include an intrinsic surface texture of the elastic material (such as rubber) that forms the lip or a surface texture resulting from an intrinsic roughness of metal molds for forming the main body. The same applies hereinafter.

Another aspect of the disclosure is a sealing device set forth in claim 4. Advantageous further developments thereof are set out in the dependent claims.

According to the present disclosure, when the sliding surface with mat-surface roughness of the mid lip has the larger surface roughness than that of at least one of the sliding surface with mat-surface roughness of the foreign matter lip and the sliding surface with mat-surface roughness of the lubricant lip, it is possible to mitigate decrease in sealing performance of at least one of the foreign matter lip and the lubricant lip while reducing the sliding resistance of the mid lip.

### [Advantageous Effects of Invention]

As described above, the present disclosure can achieve both of torque reduction and sealing performance improvement.

### [Brief Description of Drawings]

[Fig. 1]

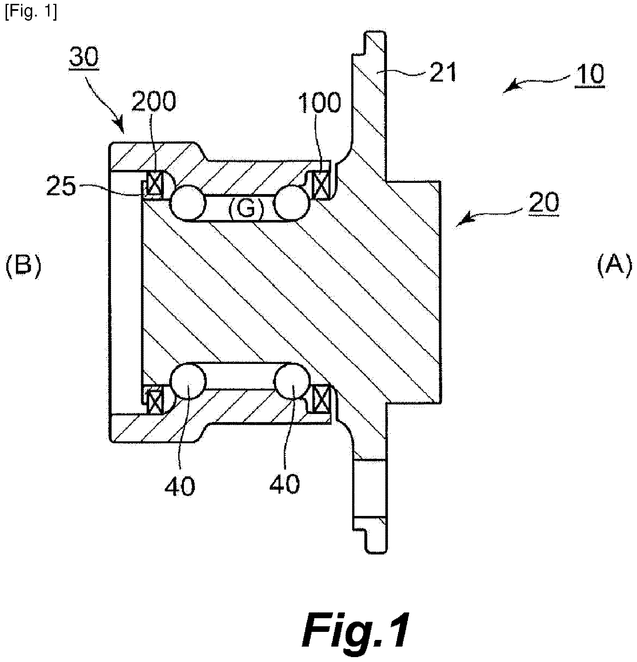

   Fig. 1 is a schematic cross-sectional view of a hub bearing according to one embodiment of the present disclosure.
[Fig. 2]

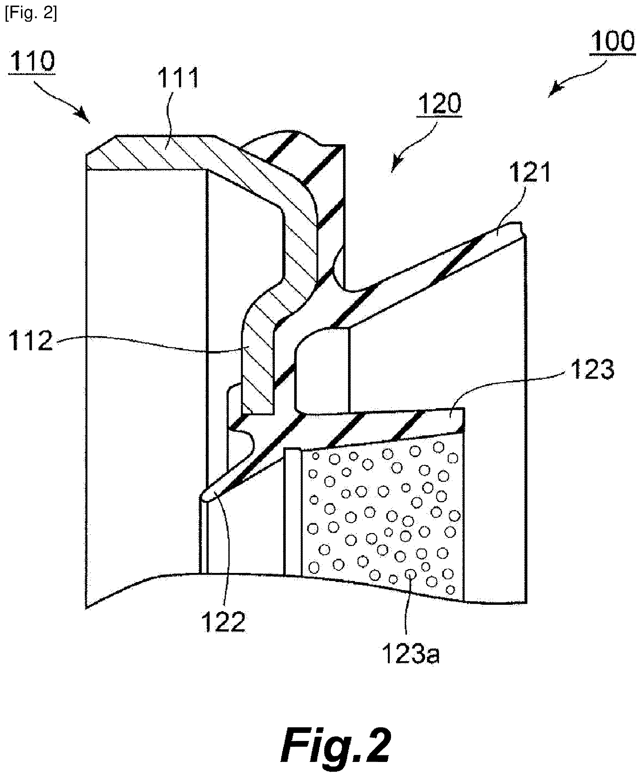

   Fig. 2 is a schematic cross-sectional view of a sealing device according to Embodiment 1 of the present disclosure, which is not encompassed by the wording of the claims.
[Fig. 3]

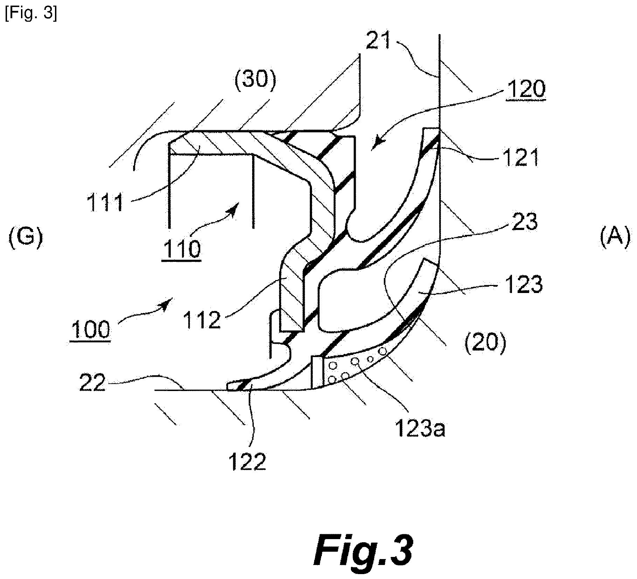

   Fig. 3 is part of a schematic cross-sectional view of the hub bearing to which the sealing device according to Embodiment 1 of the present disclosure is applied.
[Fig. 4]

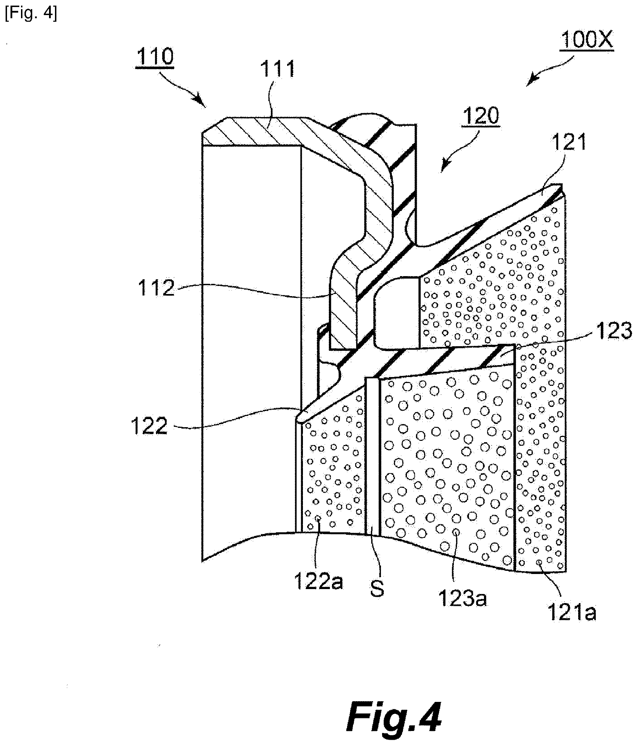

   Fig. 4 is a schematic cross-sectional view of a sealing device according to Embodiment 2 of the present disclosure.
[Fig. 5]

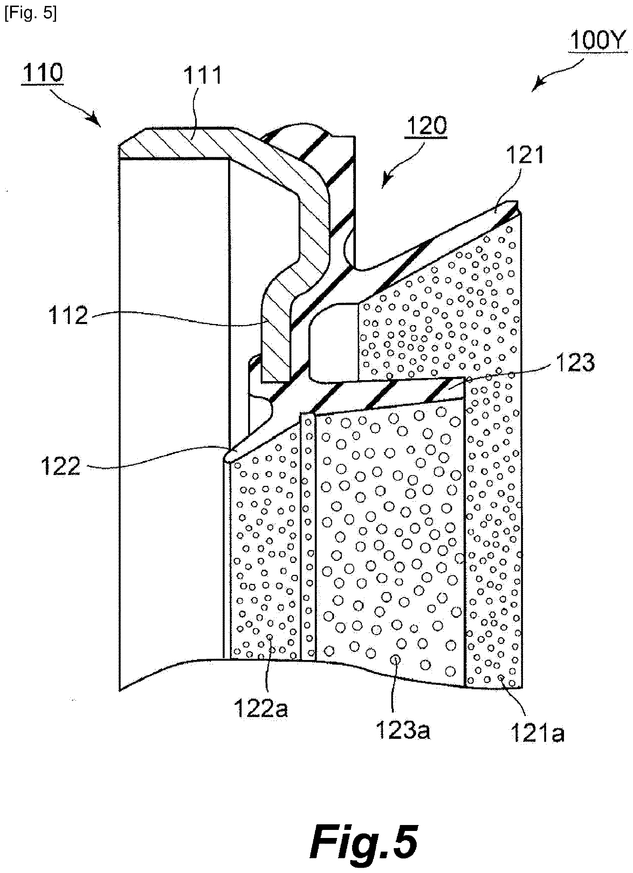

   Fig. 5 is a schematic cross-sectional view of a sealing device according to a variation of Embodiment 2 of the present disclosure.

### [Description of Embodiments]

Modes for carrying out this disclosure will be hereinafter illustratively described in detail based on specific embodiments with reference to the drawings. It should be noted that, unless otherwise particularly specified, the sizes, materials, shapes, and relative arrangement or the like of constituent components described in the embodiments are not intended to limit the scope of this disclosure.

### (Hub bearing)

A hub bearing, to which the sealing device according to this embodiment is applied, will be described with reference to Fig. 1. Fig. 1 is a schematic cross-sectional view of the hub bearing according to this embodiment of the present disclosure. Fig. 1 shows a cross-sectional view of the hub bearing cut along a plane containing a rotation center axis of an inner ring.

Cars are provided with hub bearings 10. The hub bearing 10 includes an inner ring (shaft) 20 and an outer ring (housing) 30 that are rotatable relative to each other, and a plurality of balls 40 set between them. A tire (not shown) is secured to the inner ring 20, while the outer ring 30 is attached to a vehicle body. Hereinafter, for convenience of explanation, the right side and left side of Fig. 1 shall be referred to as tire side (A) and vehicle-body side (B), respectively. An outward flange part 21 is provided to the tire side (A) of the inner ring 20 for attachment of the tire. Sealing devices 100 and 200 for sealing annular gaps between the inner ring 20 and the outer ring 30 are provided in order to inhibit ingress of foreign matter (mud water, dust and the like) from outside into the hub bearing 10 as well as to inhibit leakage of grease (G) as lubricant from inside. The sealing device 100 on the tire side (A) and the sealing device 200 on the vehicle-body side (B) may sometimes be called an outer seal and an inner seal, respectively.

The sealing device 100 on the tire side (A) and the sealing device 200 on the vehicle-body side (B) can basically adopt a similar configuration. For the sealing devices 100 and 200 of the hub bearing 10, a seal lip that slides on an end face of a component that rotates with the inner ring 20 is provided to facilitate expulsion of foreign matter or the like to the outside by centrifugal force as the inner ring 20 rotates. While a seal lip that slides on the outward flange part 21 can be provided to the sealing device 100 on the tire side (A), it is usually the case with the sealing device 200 on the vehicle-body side (B) that a slinger (annular member) 25 is provided in order to form a part corresponding to the outward flange part 21. Thus, the sealing device 200 on the vehicle-body side (B) and the sealing device 100 on the tire side (A) differ from each other in that the former commonly uses the slinger 25 while the latter does not use the slinger 25.

### (Embodiment 1)

Embodiment 1 is not encompassed by the wording of the claims but is considered as useful for understanding the invention. The sealing device according to Embodiment 1 of the present disclosure will be described with reference to Fig. 2 and Fig. 3. Fig. 2 is a schematic cross-sectional view of the sealing device according to Embodiment 1 of the present disclosure. Fig. 3 is an enlarged view of part of the schematic cross-sectional view of the hub bearing to which the sealing device according to Embodiment 1 of the present disclosure is applied. Fig. 2 and Fig. 3 show a cross-sectional view of the sealing device and others cut along a plane containing the rotation center axis of the inner ring.

In this embodiment, the sealing device 100 on the tire side (A) will be described as one example. The sealing device 100 according to this embodiment is made up of a reinforcing ring 110 secured to the outer ring 30, and a main body 120 made of an elastic member (such as rubber) integrally provided to the reinforcing ring 110. The reinforcing ring 110 includes a substantially cylindrical part 111 fixed to an inner circumferential surface of the outer ring 30 by a press fit, and an inward flange part 112 extending from an end portion of the cylindrical part 111 (see Fig. 3). The main body 120 is integrally provided to the inward flange part 112.

The main body 120 includes a foreign matter lip 121, a lubricant lip 122, and a mid lip 123. The foreign matter lip 121 is provided for inhibiting ingress of foreign matter. The foreign matter lip 121 extends radially outward and is slidable relative to the inner ring 20. The foreign matter lip 121 is slidable relative to an end face of the outward flange part 21 of the inner ring 20. The lubricant lip 122 is provided for inhibiting leakage of lubricant (grease (G)). The lubricant lip 122 extends radially inward and is slidable relative to an outer circumferential surface 22 of the inner ring 20. The mid lip 123 is provided to inhibit ingress of foreign matter as with the foreign matter lip 121 and serves to prevent foreign matter that the foreign matter lip 121 allows to pass through from accessing the balls 40. The mid lip 123 is provided between the foreign matter lip 121 and the lubricant lip 122 to extend radially outward and to be slidable relative to the inner ring 20. The mid lip 123 is slidable relative to a curved surface 23 between the outer circumferential surface 22 and the outward flange part 21 of the inner ring 20.

According to this embodiment, while a sliding surface of the mid lip 123 of the main body 120 is formed with mat-surface roughness 123a, a sliding surface of the foreign matter lip 121 and a sliding surface of the lubricant lip 122 are not formed with mat-surface roughness. The mat-surface roughness 123a has randomly arranged peaks and valleys formed by a discharge process, blasting process or the like. While it is possible to form the peaks and valleys by directly processing the main body 120, productivity can be raised by providing mat-surface roughness on surfaces of metal molds for forming the main body 120. The mat-surface roughness 123a are designed so that the ten-point average roughness RzJIS (JIS B 0601 :2001) is 2 µm or more and 40 µm or less. The mat-surface roughness 123a on the sliding surface of the mid lip 123 may be provided over the entire area of the mid lip 123 that can come into sliding contact with the inner ring 20. In the illustrated example, the entire inner circumferential surface of the mid lip 123 is provided with the mat-surface roughness 123a. Note that the entire inner circumferential surface of the mid lip 123 may not be provided with the mat-surface roughness 123a. For example, an area provided with mat-surface roughness 123a and an area not provided with the roughness may alternate in a circumferential direction. "The mat-surface roughness" refers to roughness that is actively formed on the sliding surface of the lip and do not include an intrinsic surface texture of the elastic material (such as rubber) that forms the lip or a surface texture resulting from an intrinsic roughness of metal molds for forming the main body. The same applies hereinafter.

### <Advantages of the sealing device according to this embodiment>

Since the sliding surface of the foreign matter lip 121 and the sliding surface of the lubricant lip 122 of the sealing device 100 according to this embodiment are not provided with mat-surface roughness, these lips can have better sealing performance. Thus, ingress of foreign matter such as mud water and dust from outside can be well inhibited by the foreign matter lip 121 with better sealing performance. Leakage of lubricant (grease (G)) can be well inhibited, and air tightness on the bearing side (where the balls 40 are provided) can be increased, by the lubricant lip 122 with better sealing performance.

Meanwhile, as the sliding surface of the mid lip 123 is formed with the mat-surface roughness 123a, torque due to sliding movements can be reduced. Because of the roughness 123a, the sealing performance of the mid lip 123 is lower than that of the foreign matter lip 121 and lubricant lip 122. However, since ingress of foreign matter can be sufficiently inhibited by the foreign matter lip 121 and leakage of lubricant can be sufficiently inhibited by the lubricant lip 122, the sealing device 100 as a whole can provide a satisfactorily high sealing performance even though the mid lip 123 has lower sealing performance.

As described above, the sealing device 100 according to this embodiment can achieve both of torque reduction and sealing performance improvement. It is generally the case with a sealing device that is provided to a hub bearing that air pressure inside a sealed space between the foreign matter lip and the mid lip becomes excessively lower than the atmospheric pressure. This phenomenon can occur, for example, when there are helical patterns resulting from a grinding process on the surface of the inner ring. As the inner ring rotates relative to the outer ring, the sliding movement of the foreign matter lip against the inner ring and others provides effect known as pumping, so that fluid inside sliding parts of the lip moves in a direction corresponding to the rotating direction. The helical patterns are generally formed so that foreign matter is expelled as the inner ring rotates in forward direction relative to the outer ring. Thus, when the inner ring rotates in forward direction relative to the outer ring, the air inside the sealed space between the foreign matter lip and the mid lip can be discharged to the outside. When this causes the air pressure inside the sealed space between the foreign matter lip and the mid lip to become excessively low as compared to the atmospheric pressure, the lips may be firmly pressed against the inner ring and cause an increase in torque. The sealing device 100 according to this embodiment, however, has the mid lip 123 provided with the mat-surface roughness 123a on the sliding surface as described above, because of which its sealing performance is lowered. This provides the effect of mitigating the decrease in air pressure inside the sealed space between the foreign matter lip 121 and the mid lip 123, since the air inside the sealed space between the mid lip 123 and the lubricant lip 122 is supplied when the air pressure inside the sealed space between the foreign matter lip 121 and the mid lip 123 is lowered.

In this embodiment, one configuration has been shown wherein the sliding surface of the mid lip 123 alone is provided with mat-surface roughness 123a, while the sliding surface of the foreign matter lip 121 and the sliding surface of the lubricant lip 122 are not provided with mat-surface roughness. However, the sliding surface of the lubricant lip 122 may also be provided with the mat-surface roughness as with the mid lip 123, if, for example, the sealing performance of the lubricant lip 122 is not to be increased while the foreign matter lip 121 is to be configured to have higher sealing performance. In this case, the sliding surface with the mat-surface roughness of the lubricant lip 122 may have a smaller surface roughness than that of the sliding surface with the mat-surface roughness of the mid lip 123. For example, the former may have a ten-point average roughness RzJIS set to be in the range from 2 µm to 30 µm (more preferably from 5 µm to 20 µm), while the latter may have a ten-point average roughness RzJIS set to be in the range from 10 µm to 40 µm, the former having a smaller ten-point average roughness than the latter.

The sliding surface of the foreign matter lip 121 may also be provided with the mat-surface roughness as with the mid lip 123, if, for example, the sealing performance of the foreign matter lip 121 is not to be increased while the lubricant lip 122 is to be configured to have higher sealing performance. In this case, the sliding surface with the mat-surface roughness of the foreign matter lip 121 may have a smaller surface roughness than that of the sliding surface with the mat-surface roughness of the mid lip 123. For example, the former may have a ten-point average roughness RzJIS set to be in the range from 2 µm to 30 µm (more preferably from 5 µm to 20 µm), while the latter may have a ten-point average roughness RzJIS set to be in the range from 10 µm to 40 µm, the former having a smaller ten-point average roughness than the latter.

### (Embodiment 2)

Fig. 4 and Fig. 5 show Embodiment 2 of the present disclosure. In Embodiment 1 described above, one configuration has been shown wherein the sliding surface of the mid lip is provided with mat-surface roughness, while the sliding surface of the foreign matter lip and the sliding surface of the lubricant lip are not provided with mat-surface roughness. In Embodiment 2, one configuration will be shown wherein all the lips are formed with the mat-surface roughness on the sliding surfaces. Other features in the configuration and effect than the mat-surface roughness are the same as those of Embodiment 1, and therefore the same constituent elements are given the same reference numerals and the description thereof may be omitted when appropriate.

Fig. 4 is a schematic cross-sectional view of a sealing device according to Embodiment 2 of the present disclosure. Fig. 4 shows a cross-sectional view of the sealing device cut along a plane containing a rotation center axis of the inner ring.

In this embodiment, a sealing device 100X on the tire side (A) will be described as one example. Similarly to Embodiment 1, the sealing device 100× according to this embodiment is made up of a reinforcing ring 110 secured to the outer ring, and a main body 120 made of an elastic member (such as rubber) integrally provided to the reinforcing ring 110.

Similarly to Embodiment 1, the main body 120 includes a foreign matter lip 121, a lubricant lip 122, and a mid lip 123. Configurations of these lips are same as those described above in Embodiment 1 except for a configuration related to the mat-surface roughness.

According to this embodiment, the foreign matter lip 121, lubricant lip 122, and mid lip 123 of the main body 120 each has a sliding surface provided with mat-surface roughness 121a, 122a, and 123a. The mat-surface roughness 123a on the sliding surface of the mid lip 123 is formed with a larger surface roughness than that of the mat-surface roughness 121a and 122a on the respective sliding surfaces of the foreign matter lip 121 and lubricant lip 122. The roughness 123a of the former is formed with a ten-point average roughness RzJIS set to be in the range from 10 µm to 40 µm while the roughness 121a and 122a of the latter is formed with a ten-point average roughness RzJIS set to be in the range from 2 µm to 30 µm (more preferably from 5 µm to 20 µm), the former having a larger ten-point average roughness than the latter. The mat-surface roughness 121a, 122a, and 123a has randomly arranged peaks and valleys formed by the methods as already described in Embodiment 1.

### <Advantages of the sealing device according to this embodiment>

Since the mat-surface roughness 123a on the sliding surface of the mid lip 123 of the sealing device 100X according to this embodiment is formed with a larger surface roughness than that of the mat-surface roughness 121a and 122a on the respective sliding surfaces of the foreign matter lip 121 and lubricant lip 122, it is possible to mitigate decrease in sealing performance of the foreign matter lip 121 and lubricant lip 122 while reducing sliding resistance of the mid lip 123. Namely, the sealing performance of the foreign matter lip 121 can be increased by making the surface roughness of the sliding surface with the mat-surface roughness 121a of the foreign matter lip 121 smaller. This can well inhibit ingress of foreign matter such as mud water or dust from outside. Similarly, the sealing performance of the lubricant lip 122 can be increased by making the surface roughness of the sliding surface with the mat-surface roughness 122a of the lubricant lip 122 smaller. This allows leakage of lubricant (grease (G)) to be well inhibited, and air tightness on the bearing side (where the balls 40 are provided) to be increased.

Meanwhile, as the mat-surface roughness 123a on the sliding surface of the mid lip 123 is formed with a larger surface roughness, the torque due to the sliding movement can be reduced. Because of the roughness 123a with a larger surface roughness, the sealing performance of the mid lip 123 is lower than that of the foreign matter lip 121 and lubricant lip 122. However, since ingress of foreign matter can be well prevented by the foreign matter lip 121 and leakage of lubricant can be well prevented by the lubricant lip 122, the sealing device 100× as a whole can provide a satisfactorily high sealing performance even though the mid lip 123 has lower sealing performance.

The mat-surface roughness 123a on the sliding surface of the mid lip 123 may be provided over the entire area of the mid lip 123 that can come into sliding contact with the inner ring 20. In this embodiment, there is a region S not provided with roughness between an area provided with the mat-surface roughness 122a of the lubricant lip 122 and an area provided with the mat-surface roughness 123a of the mid lip 123. In a sealing device 100Y according to a variation shown in Fig. 5, there is no such region without roughness as in this embodiment. It is also possible to adopt a configuration in which an area provided with mat-surface roughness and an area not provided with the roughness alternate in the circumferential direction on the sliding surface of each lip.

As described above, the sealing device 100X according to this embodiment can achieve both of torque reduction and sealing performance improvement. In this embodiment, as with Embodiment 1 described above, the effect of mitigating the decline in air pressure inside the sealed space between the foreign matter lip 121 and the mid lip 123 is achieved. In this embodiment, since the foreign matter lip 121 and the lubricant lip 122 are each provided with the mat-surface roughness 121a and 122a on their sliding surfaces, they have lower sealing performance as compared to Embodiment 1, but on the other hand the torque can be reduced even more. The configuration of the sealing device 100X according to this embodiment may be adopted if priority is given to torque reduction, while the configuration of the sealing device 100 according to Embodiment 1 may be adopted if priority is given to sealing performance improvement. One configuration has been shown for the sealing device 100× according to this embodiment wherein the mat-surface roughness 123a on the sliding surface of the mid lip 123 is formed with a larger surface roughness than that of the mat-surface roughness 121a and 122a on the respective sliding surfaces of the foreign matter lip 121 and lubricant lip 122. The surface roughness of the sliding surface with the mat-surface roughness 123a of the mid lip 123 may be larger than that of the sliding surface with the mat-surface roughness 121a of the foreign matter lip 121 only, if, for example, the sealing performance of the lubricant lip 122 is not to be increased while the foreign matter lip 121 is to be configured to have higher sealing performance. Namely, the sliding surface with the mat-surface roughness 123a of the mid lip 123 may not have a larger surface roughness than that of the sliding surface with the mat-surface roughness 122a of the lubricant lip 122. The surface roughness of the sliding surface with the mat-surface roughness 123a of the mid lip 123 may be larger than that of the sliding surface with the mat-surface roughness 122a of the lubricant lip 122 only, if, for example, the sealing performance of the foreign matter lip 121 is not to be increased while the lubricant lip 122 is to be configured to have higher sealing performance. Namely, the sliding surface with the mat-surface roughness 123a of the mid lip 123 may not have a larger surface roughness than that of the sliding surface with the mat-surface roughness 121a of the foreign matter lip 121.

### (Others)

In Embodiment 1 and Embodiment 2 above, sealing devices 100, 100X, and 100Y provided to the tire side (A) of the hub bearing 10 have been described as one example. The sealing device according to the present disclosure can also be applied to the sealing device 200 provided to the vehicle-body side (B) of the hub bearing 10. In this case, difference would be that the foreign matter lip 121, lubricant lip 122, and mid lip 123 slide on an annular member (slinger 25) fixed to the inner ring 20 rather than the inner ring 20.

In Embodiment 1 and Embodiment 2 above, sealing devices applied to the hub bearing 10 have been described as one example. The sealing device of the present disclosure may also be applied to other purposes than hub bearings. Namely, sealing devices similar to those described in the embodiments above may be applied to other purposes. For example, the sealing device according to the present disclosure may be applied to a sealing device used in differential devices or transmissions.

### [Reference Signs List]

- 10: Hub bearing
- 20: Inner ring
- 21: Outward flange part
- 22: Outer circumferential surface
- 23: Curved surface
- 25: Slinger
- 30: Outer ring
- 40: Ball
- 100, 100X, 100Y: Sealing device
- 200: Sealing device
- 110: Reinforcing ring
- 111: Cylindrical part
- 112: Inward flange part
- 120: Main body
- 121: Foreign matter lip
- 121a: Roughness
- 122: Lubricant lip
- 122a: Roughness
- 123: Mid lip
- 123a: Roughness

## Claims

1. A sealing device (100X, 100Y) configured to seal an annular gap between a shaft (20) and a housing (30) that are rotatable relative to each other, the sealing device (100X, 100Y) comprising:
a reinforcing ring (110) configured to be fixed to the housing (30); and
a main body (120) made of an elastic member and integrally provided to the reinforcing ring (110),
the main body (120) including:
a foreign matter lip (121) extending radially outward and slidable relative to the shaft (20) or an annular member (25) fixed to the shaft (20) for inhibiting ingress of foreign matter,
a lubricant lip (122) extending radially inward and slidable relative to the shaft (20) or the annular member (25) fixed to the shaft (20) for inhibiting leakage of a lubricant,
a mid lip (123) provided between the foreign matter lip (121) and the lubricant lip (122) slidable relative to the shaft (20) or the annular member (25) fixed to the shaft (20),
the foreign matter lip (121), lubricant lip (122), and mid lip (123) each having a sliding surface with mat-surface roughness (121a, 122a, 123a),
**characterized by**
the sliding surface with mat-surface roughness (123a) of the mid lip (123) and the sliding surface with mat-surface roughness (121a) of the foreign matter lip (121) having a larger surface roughness than that of the sliding surface with mat-surface roughness (122a) of the lubricant lip (122).

2. The sealing device (100X, 100Y) according to claim 1, wherein the mid lip (123) is provided with mat-surface roughness (123a) on the sliding surface thereof with a ten-point average roughness RzJIS in a range from 10 µm to 40 µm, and the lubricant lip (122) is provided with mat-surface roughness (122a) on the sliding surface thereof with a ten-point average roughness RzJIS in a range from 2 µm to 30 µm, and wherein the ten-point average roughness of the sliding surface with mat-surface roughness (123a) of the mid lip (123) is larger than the ten-point average roughness of the sliding surface with mat-surface roughness (122a) of the lubricant lip (122).

3. The sealing device (100X, 100Y) according to claim 1, wherein the mid lip (123) is provided with mat-surface roughness (123a) on the sliding surface thereof with a ten-point average roughness RzJIS in a range from 10 µm to 40 µm, and the lubricant lip (122) is provided with mat-surface roughness (122a) on the sliding surface thereof with a ten-point average roughness RzJIS in a range from 5 µm to 20 µm, and wherein the ten-point average roughness of the sliding surface with mat-surface roughness (123a) of the mid lip (123) is larger than the ten-point average roughness of the sliding surface with mat-surface roughness (122a) of the lubricant lip (122).

4. A sealing device (100X, 100Y) configured to seal an annular gap between a shaft (20) and a housing (30) that are rotatable relative to each other, the sealing device (100X, 100Y) comprising:
a reinforcing ring (110) configured to be fixed to the housing (30); and
a main body (120) made of an elastic member and integrally provided to the reinforcing ring (110),
the main body (120) including:
a foreign matter lip (121) extending radially outward and slidable relative to the shaft (20) or an annular member (25) fixed to the shaft (20) for inhibiting ingress of foreign matter,
a lubricant lip (122) extending radially inward and slidable relative to the shaft (20) or the annular member (25) fixed to the shaft (20) for inhibiting leakage of a lubricant,
a mid lip (123) provided between the foreign matter lip (121) and the lubricant lip (122) slidable relative to the shaft (20) or the annular member (25) fixed to the shaft (20),
the foreign matter lip (121), lubricant lip (122), and mid lip (123) each having a sliding surface with mat-surface roughness (121a, 122a, 123a),
**characterized by**
the sliding surface with mat-surface roughness (123a) of the mid lip (123) having a larger surface roughness than that of the sliding surface with mat-surface roughness (121a) of the foreign matter lip (121).

5. The sealing device (100X, 100Y) according to claim 4, wherein the mid lip (123) is provided with mat-surface roughness (123a) on the sliding surface thereof with a ten-point average roughness RzJIS in a range from 10 µm to 40 µm, and the foreign matter lip (121) is provided with mat-surface roughness (121a) on the sliding surface thereof with a ten-point average roughness RzJIS in a range from 2 µm to 30 µm, and wherein the ten-point average roughness of the sliding surface with mat-surface roughness (123a) of the mid lip (123) is larger than the ten-point average roughness of the sliding surface with mat-surface roughness (121) of the foreign matter lip (121a).

6. The sealing device (100X, 100Y) according to claim 4, wherein the mid lip (123) is provided with mat-surface roughness (123a) on the sliding surface thereof with a ten-point average roughness RzJIS in a range from 10 µm to 40 µm, and the foreign matter lip (121) is provided with mat-surface roughness (121a) on the sliding surface thereof with a ten-point average roughness RzJIS in a range from 5 µm to 20 µm, and wherein the ten-point average roughness of the sliding surface with mat-surface roughness (123a) of the mid lip (123) is larger than the ten-point average roughness of the sliding surface with mat-surface roughness (121a) of the foreign matter lip (121).

## Patentansprüche

1. Dichtungsvorrichtung (100X, 100Y), die konfiguriert ist, einen ringförmigen Spalt zwischen einer Welle (20) und einem Gehäuse (30) abzudichten, die relativ zueinander rotierbar sind, wobei die Dichtungsvorrichtung (100X, 100Y) Folgendes aufweist:
einen Verstärkungsring (110), der konfiguriert ist, an dem Gehäuse (30) befestigt zu werden; und
einen Hauptkörper (120), der aus einem elastischen Bauteil hergestellt ist und einstückig mit dem Verstärkungsring (110) vorgesehen ist,
wobei der Hauptkörper (120) Folgendes hat:
eine Fremdkörperlippe (121), die sich radial nach außen erstreckt und relativ zu der Welle (20) oder einem ringförmigen Bauteil (25), das an der Welle (20) befestigt ist, gleitbar ist, um ein Eindringen von Fremdkörpern zu verhindern,
eine Schmiermittellippe (122), die sich radial nach innen erstreckt und relativ zu der Welle (20) oder dem ringförmigen Bauteil (25), das an der Welle (20) befestigt ist, gleitbar ist, um eine Leckage eines Schmiermittels zu verhindern,
eine Mittellippe (123), die zwischen der Fremdkörperlippe (121) und der Schmiermittellippe (122) vorgesehen ist, die relativ zu der Welle (20) oder dem ringförmigen Bauteil (25), das an der Welle (20) befestigt ist, gleitbar ist,
wobei die Fremdkörperlippe (121), die Schmiermittellippe (122) und die Mittellippe (123) jeweils eine Gleitfläche mit einer Mattflächenrauheit (121a, 122a, 123a) haben,
**dadurch gekennzeichnet, dass**
die Gleitfläche mit der Mattflächenrauheit (123a) der Mittellippe (123) und die Gleitfläche mit der Mattflächenrauheit (121a) der Fremdkörperlippe (121) eine größere Oberflächenrauheit als diejenige der Gleitfläche mit der Mattflächenrauheit (122a) der Schmiermittellippe (122) haben.

2. Dichtungsvorrichtung (100X, 100Y) nach Anspruch 1, wobei die Mittellippe (123) mit einer Mattflächenrauheit (123a) auf der Gleitfläche davon mit einer Zehnpunkt-Durchschnittsrauheit RzJIS in einem Bereich von 10 µm bis 40 µm versehen ist, und die Schmiermittellippe (122) mit einer Mattflächenrauheit (122a) auf der Gleitfläche davon mit einer Zehnpunkt-Durchschnittsrauheit RzJIS in einem Bereich von 2 µm bis 30 µm versehen ist, und wobei die Zehnpunkt-Durchschnittsrauheit der Gleitfläche mit der Mattflächenrauheit (123a) der Mittellippe (123) größer als die Zehnpunkt-Durchschnittsrauheit der Gleitfläche mit der Mattflächenrauheit (122a) der Schmiermittellippe (122) ist.

3. Dichtungsvorrichtung (100X, 100Y) nach Anspruch 1, wobei die Mittellippe (123) mit einer Mattflächenrauheit (123a) auf der Gleitfläche davon mit einer Zehnpunkt-Durchschnittsrauheit RzJIS in einem Bereich von 10 µm bis 40 µm versehen ist, und die Schmiermittellippe (122) mit einer Mattflächenrauheit (122a) auf der Gleitfläche davon mit einer Zehnpunkt-Durchschnittsrauheit RzJIS in einem Bereich von 5 µm bis 20 µm versehen ist, und wobei die Zehnpunkt-Durchschnittsrauheit der Gleitfläche mit der Mattflächenrauheit (123a) der Mittellippe (123) größer als die Zehnpunkt-Durchschnittsrauheit der Gleitfläche mit der Mattflächenrauheit (122a) der Schmiermittellippe (122) ist.

4. Dichtungsvorrichtung (100X, 100Y), die konfiguriert ist, einen ringförmigen Spalt zwischen einer Welle (20) und einem Gehäuse (30) abzudichten, die relativ zueinander rotierbar sind, wobei die Dichtungsvorrichtung (100X, 100Y) Folgendes aufweist:
einen Verstärkungsring (110), der konfiguriert ist, an dem Gehäuse (30) befestigt zu werden; und
einen Hauptkörper (120), der aus einem elastischen Bauteil hergestellt ist und einstückig mit dem Verstärkungsring (110) vorgesehen ist,
wobei der Hauptkörper (120) Folgendes hat:
eine Fremdkörperlippe (121), die sich radial nach außen erstreckt und relativ zu der Welle (20) oder einem ringförmigen Bauteil (25), das an der Welle (20) befestigt ist, gleitbar ist, um ein Eindringen von Fremdkörpern zu verhindern,
eine Schmiermittellippe (122), die sich radial nach innen erstreckt und relativ zu der Welle (20) oder dem ringförmigen Bauteil (25), das an der Welle (20) befestigt ist, gleitbar ist, um eine Leckage eines Schmiermittels zu verhindern,
eine Mittellippe (123), die zwischen der Fremdkörperlippe (121) und der Schmiermittellippe (122) vorgesehen ist, die relativ zu der Welle (20) oder dem ringförmigen Bauteil (25), das an der Welle (20) befestigt ist, gleitbar ist,
wobei die Fremdkörperlippe (121), die Schmiermittellippe (122) und die Mittellippe (123) jeweils eine Gleitfläche mit einer Mattflächenrauheit (121a, 122a, 123a) haben,
**dadurch gekennzeichnet, dass**
die Gleitfläche mit der Mattflächenrauheit (123a) der Mittellippe (123) eine größere Oberflächenrauheit als diejenige der Gleitfläche mit der Mattflächenrauheit (121a) der Fremdkörperlippe (121) hat.

5. Dichtungsvorrichtung (100X, 100Y) nach Anspruch 4, wobei die Mittellippe (123) mit einer Mattflächenrauheit (123a) auf der Gleitfläche davon mit einer Zehnpunkt-Durchschnittsrauheit RzJIS in einem Bereich von 10 µm bis 40 µm versehen ist, und die Fremdkörperlippe (121) mit einer Mattflächenrauheit (121a) auf der Gleitfläche davon mit einer Zehnpunkt-Durchschnittsrauheit RzJIS in einem Bereich von 2 µm bis 30 µm versehen ist, und wobei die Zehnpunkt-Durchschnittsrauheit der Gleitfläche mit der Mattflächenrauheit (123a) der Mittellippe (123) größer als die Zehnpunkt-Durchschnittsrauheit der Gleitfläche mit der Mattflächenrauheit (121) der Fremdkörperlippe (121a) ist.

6. Dichtungsvorrichtung (100X, 100Y) nach Anspruch 4, wobei die Mittellippe (123) mit einer Mattflächenrauheit (123a) auf der Gleitfläche davon mit einer Zehnpunkt-Durchschnittsrauheit RzJIS in einem Bereich von 10 µm bis 40 µm versehen ist, und die Fremdkörperlippe (121) mit einer Mattflächenrauheit (121a) auf der Gleitfläche davon mit einer Zehnpunkt-Durchschnittsrauheit RzJIS in einem Bereich von 5 µm bis 20 µm versehen ist, und wobei die Zehnpunkt-Durchschnittsrauheit der Gleitfläche mit der Mattflächenrauheit (123a) der Mittellippe (123) größer als die Zehnpunkt-Durchschnittsrauheit der Gleitfläche mit der Mattflächenrauheit (121a) der Fremdkörperlippe (121) ist.

## Revendications

1. Dispositif d'étanchéité (100X, 100Y) configuré pour rendre étanche un espace annulaire entre un arbre (20) et un boîtier (30) qui sont rotatifs l'un par rapport à l'autre, le dispositif d'étanchéité (100X, 100Y) comprenant :
une bague de renforcement (110) configurée pour être fixée au boîtier (30) ; et
un corps principal (120) constitué d'un élément élastique et préparé d'un seul pièce avec la bague de renforcement (110),
le corps principal (120) comprenant :
une lèvre de matière étrangère (121) s'étendant radialement vers l'extérieur et coulissante par rapport à l'arbre (20) ou un élément annulaire (25) fixé à l'arbre (20) pour empêcher l'entrée de matière étrangère,
une lèvre de lubrifiant (122) s'étendant radialement vers l'intérieur et coulissante par rapport à l'arbre (20) ou l'élément annulaire (25) fixé à l'arbre (20) pour empêcher la fuite d'un lubrifiant,
une lèvre intermédiaire (123) disposée entre la lèvre de matière étrangère (121) et la lèvre de lubrifiant (122), qui peut coulisser par rapport à l'arbre (20) ou à l'élément annulaire (25) fixé à l'arbre (20),
la lèvre de matière étrangère (121), la lèvre de lubrifiant (122) et la lèvre intermédiaire (123) ayant chacune une surface de glissement avec une rugosité de surface dépolie (121a, 122a, 123a),
**caractérisé par**
la surface de glissement avec une rugosité de surface dépolie (123a) de la lèvre intermédiaire (123) et la surface de glissement avec une rugosité de surface dépolie (121a) de la lèvre de matière étrangère (121) ayant une rugosité de surface plus grande que celle de la surface de glissement avec une rugosité de surface dépolie (122a) de la lèvre de lubrifiant (122).

2. Dispositif d'étanchéité (100X, 100Y) selon la revendication 1, dans lequel la lèvre intermédiaire (123) présente sur sa surface de glissement une rugosité de surface dépolie (123a) ayant une rugosité moyenne en dix points RzJIS dans une plage de 10 µm à 40 µm, et la lèvre lubrifiante (122) présente sur sa surface de glissement une rugosité de surface dépolie (122a) ayant une rugosité moyenne en dix points RzJIS dans une plage de 2 µm à 30 µm, et dans lequel la rugosité moyenne en dix points de la surface de glissement avec une rugosité de surface dépolie (123a) de la lèvre intermédiaire (123) est plus grande que la rugosité moyenne en dix points de la surface de glissement avec une rugosité de surface dépolie (122a) de la lèvre de lubrifiant (122).

3. Dispositif d'étanchéité (100X, 100Y) selon la revendication 1, dans lequel la lèvre intermédiaire (123) présente sur sa surface de glissement une rugosité de surface dépolie (123a) ayant une rugosité moyenne en dix points RzJIS dans une plage de 10 µm à 40 µm, et la lèvre lubrifiante (122) présente sur sa surface de glissement une rugosité de surface dépolie (122a) ayant une rugosité moyenne en dix points RzJIS dans une plage de 5 µm à 20 µm, et dans lequel la rugosité moyenne en dix points de la surface de glissement avec une rugosité de surface dépolie (123a) de la lèvre intermédiaire (123) est plus grande que la rugosité moyenne en dix points de la surface de glissement avec une rugosité de surface dépolie (122a) de la lèvre de lubrifiant (122).

4. Dispositif d'étanchéité (100X, 100Y) configuré pour rendre étanche un espace annulaire entre un arbre (20) et un boîtier (30) qui sont rotatifs l'un par rapport à l'autre, le dispositif d'étanchéité (100X, 100Y) comprenant :
une bague de renforcement (110) configurée pour être fixée au boîtier (30) ; et
un corps principal (120) constitué d'un élément élastique et préparé d'un seul pièce avec la bague de renforcement (110),
le corps principal (120) comprenant :
une lèvre de matière étrangère (121) s'étendant radialement vers l'extérieur et coulissante par rapport à l'arbre (20) ou un élément annulaire (25) fixé à l'arbre (20) pour empêcher l'entrée de matière étrangère,
une lèvre de lubrifiant (122) s'étendant radialement vers l'intérieur et coulissante par rapport à l'arbre (20) ou l'élément annulaire (25) fixé à l'arbre (20) pour empêcher la fuite d'un lubrifiant,
une lèvre intermédiaire (123) disposée entre la lèvre de matière étrangère (121) et la lèvre de lubrifiant (122), qui peut coulisser par rapport à l'arbre (20) ou à l'élément annulaire (25) fixé à l'arbre (20),
la lèvre de matière étrangère (121), la lèvre de lubrifiant (122) et la lèvre intermédiaire (123) ayant chacune une surface de glissement avec une rugosité de surface dépolie (121a, 122a, 123a),
**caractérisé par**
la surface de glissement ayant rugosité de surface dépolie (123a) de la lèvre intermédiaire (123) ayant une plus grande rugosité de surface que celle de la surface de glissement avec rugosité de surface dépolie (121a) de la lèvre de matière étrangère (121).

5. Dispositif d'étanchéité (100X, 100Y) selon la revendication 4, dans lequel la lèvre intermédiaire (123) présente sur sa surface de glissement une rugosité de surface dépolie (123a) ayant une rugosité moyenne en dix points RzJIS dans une plage de 10 µm à 40 µm, et la lèvre de matière étrangère (121) présente sur sa surface de glissement une rugosité de surface dépolie (121a) ayant une rugosité moyenne en dix points RzJIS dans une plage de 2 µm à 30 µm, et dans lequel la rugosité moyenne en dix points de la surface de glissement avec une rugosité de surface dépolie (123a) de la lèvre intermédiaire (123) est plus grande que la rugosité moyenne en dix points de la surface de glissement avec une rugosité de surface dépolie (121) de la lèvre de matière étrangère (121a).

6. Dispositif d'étanchéité (100X, 100Y) selon la revendication 4, dans lequel la lèvre intermédiaire (123) présente sur sa surface de glissement une rugosité de surface dépolie (123a) ayant une rugosité moyenne en dix points RzJIS dans une plage de 10 µm à 40 µm, et la lèvre de matière étrangère (121) présente sur sa surface de glissement une rugosité de surface dépolie (121a) ayant une rugosité moyenne en dix points RzJIS dans une plage de 5 µm à 20 µm, et dans lequel la rugosité moyenne en dix points de la surface de glissement avec une rugosité de surface dépolie (123a) de la lèvre intermédiaire (123) est plus grande que la rugosité moyenne en dix points de la surface de glissement avec une rugosité de surface dépolie (121) de la lèvre de matière étrangère (121a).
